# EUROPEAN PATENT APPLICATION

(11) **EP 0 629 541 A2**
(43) Date of publication of application: **21.12.1994**
(21) Application number: 94108360.2
(22) Date of filing: 31.05.1994
(51) Int. Cl.: B62D 5/06, F16L 55/027

(54) **Connecting piece for hydraulic circuits suitable for balancing the pressure of the fluid contained therein**

(30) Priority: 01.06.1993 IT MI931148; 04.02.1994 IT MI940206
(71) Applicant: MURRAY EUROPE S.p.A., I-20090 Trezzano S/N (Milano) (IT)
(72) Inventor: Rondonotti, Claudio, I-20090 Trezzano S/N (IT); Polidori, Gianfranco, I-20090 Trezzano S/N (IT)
(74) Representative: Lecce, Giovanni

(57) **Abstract**

A connecting piece for hydraulic circuits comprises a substantially cylindrical longitudinally drilled body (10), having a central sector (12) provided with two sets of radial holes (14) and opposing end sectors (16), (18), on which two or more inclined plane protruding gears (22) are obtained.

A set of holes (14) is circumscribed by a shoulder (24) and at least in the direction of one of them, the central sector (12) is sunk according to an inclined orientation to form a cone-shaped portion (28) obtained between the two sets of holes (14).

Alternative embodiments provide a connecting piece (50) having one only set of radial holes (58) on a central sector (56) circumscribed on opposing fronts by a shoulder (60); besides, on a sector (54) one or more protruding gears (64) and a connection (10') having one or more radial holes (86) on the sector (72) which circumscribes a socket seat (76'), partly extended in longitudinal direction within said sector.

## Description

### BACKGROUND

This invention relates to a connecting piece for hydraulic circuits, suitable for balancing the pressure of the fluid contained therein.

More particularly, this invention relates to a device for balancing the pressure of the fluid, especially suitable to be utilized in the power steering system of vehicles.

As is known, some motor vehicles are provided with an hydraulic servo-mechanism suitable to reduce the strain necessary to rotate the steering wheel during the running and the manoeuvre. Such mechanism comprises basically an hydraulic central assembly, installed on the vehicle, and a system of valves which, by opening when the strain exercised on the steering wheel exceeds a given value, take the pressurized fluid, causing it to act on the steering-gear lever to obtain an additional power orientated in the same direction as the steering direction.

The aforementioned servo-mechanisms have often a drawback associated to the fluid pressure, which causes, especially during the standstill manoeuvres, a remarkable noisiness of the whole; the drawback is due, in particular, to the pressure impulses of the fluid, starting from the source of hydraulic pressure constituted by the compressor or pump, which are transmitted to the circuit along which said fluid flows to reach and activate the servo-mechanism.

In order to obviate the aforementioned drawback, several solutions have been proposed to balance the pressure which creates within the circuit, providing flexible coaxial ducts within same, the innermost of which is provided with radially orientated openings; a metal injecting nozzle, placed at the mouth of the circuit, acts as a connection between said internal duct and the end of the metal tube connected to the pressure source. Said nozzle, provided with an axial drilling, is connected to the small metal tube by welding or it is pressure-inserted in same; in the latter solution, proposed by the international patent PCTCH 910028, the nozzle portion suitable to be inserted in the tube is hexagon-shaped, in order to create more axial through-ways for the fluid.

It has been pointed out that in the hypothesis of a connection by welding of the aforementioned components, the scales or clots which form as a consequence of the operation may come off the body and enter the duct; in this case, the impurities, however of minor size, jeopardize the working of the servo-mechanism, reaching the steering wheel gear box where they jam or at least alter the working of the valves. Besides, the presence of projections caused by welding may jeopardize the integrity of the external tube from rubber which covers the welded parts and which is tightened on same by means of a metal collar, both when said external rubber tube is inserted into the small metal tube and during the squashing of said collar. The irregular projections penetrate therefore the rubber tube, triggering a breaking process which may lead to a burst, given the high pressure to which the internal fluid is brought.

The solution which provides for the pressure-fitting of the hexagon-shaped portion of the nozzle inserted into the metal tube involves remarkable working problems for both of the components, because of the severe dimensional tolerances to be complied with. Besides, both of the above described embodiments realize an element suitable to connect only the small metal tube which comes out from the pressure assembly and the internal flexible duct. Object of this invention is to obviate the aforementioned drawbacks.

More particularly, object of this invention is to provide a connecting piece for hydraulic circuits, suitable to balance the pressure of the fluid contained therein, easily and efficaciously connectable to the duct above, with no need for high precision preliminary welding operations and workings.

A further object of this invention is to provide a connecting piece as defined above, such as to allow the contemporaneous distribution of the fluid along alternative directions, to counterbalance the pressure impulses to which said fluid is subject.

A further not last object of this invention is to provide a connecting piece for hydraulic circuits which, according to a preferred embodiment, may be utilized indifferently for the connection of the small metal tube to the internal flexible duct or between two sections of said flexible duct, being positioned along the latter in any position whatever.

These and still further objects are reached by the connecting piece for hydraulic circuits subject matter of this invention, suitable for balancing the pressure of the fluid contained therein, which comprises a substantially cylindrical axially drilled body from metal or other suitable material for the connection of rigid and/or flexible ducts, coaxial relatively to a sleeve, and characterized basically in that it has a central sector provided with at least two sets of radial through-holes, and opposing end sectors.

The technical and functional characteristics of the connecting piece subject matter of this invention will be more clearly stressed by the following description of a preferred non limitative embodiment, made with reference to the enclosed drawings, wherein:
Fig. 1 is a schematic partly sectioned side view of the connecting piece subject matter of this invention;
Fig. 2 is a schematic view of said element in working position, which connects, in the flexible sleeve of a servo-mechanism, the end small metal tube to the internal flexible duct;
Fig. 3 is a schematic view of a longitudinal section of the flexible sleeve of a servo-mechanism in which a first piece, subject matter of this invention, connects the end small tube to the internal flexible duct, while a second identical piece is positioned between two sections of said duct;
Fig. 4 is a schematic side view of a simplified variant of the connecting piece subject matter of this invention;
Fig. 5 is a schematic longitudinal section of the connecting piece of the preceding figure;
Fig. 6 is a schematic longitudinal section of still a further simplified variant of the connecting piece subject matter of this invention;
Fig. 7 is a schematic side view of the connecting piece of the preceding figure;
Fig. 8 is a schematic view of said piece in working position, which connects, within the flexible sleeve of a servo-mechanism, the end small metal tube to the internal flexible duct.

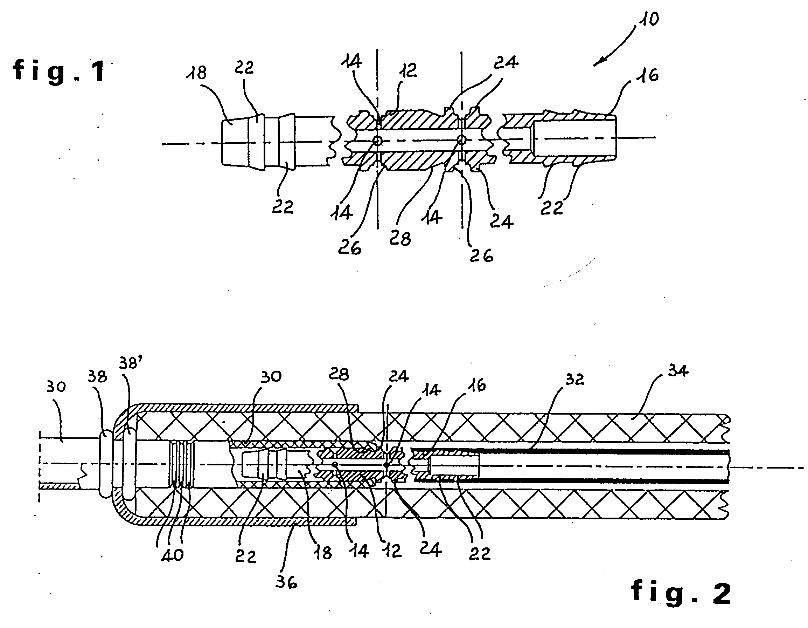

With starting reference to Fig. 1, the connecting piece for hydraulic circuits subject matter of this invention, referred to as a whole by 10, comprises a substantially cylindrical sleeve from metal or other suitable material, constituted by a central sector 12 along which at least two spaced out, radially arranged sets of holes 14 are obtained, and by opposing end sectors 16 and 18, provided respectively, along the periphery, with inclined plane protruding gears 22.

One of the sets of radial holes 14, obtained along the central sector and arranged, by way of example, at 90° relatively to one another, is circumscribed above and below by a shoulder 24, obtained by removal of material or by moulding, which shoulders cause a reduction in the diameter of said sector; each set of said holes 14 is obtained along a groove 26, circumscribed by shoulders 24. At least in the direction of one of the latter, the central sector 12 is sunk according to an inclined plane, to form a cone-shaped portion 28, which develops along the length comprised between the set of holes 14.

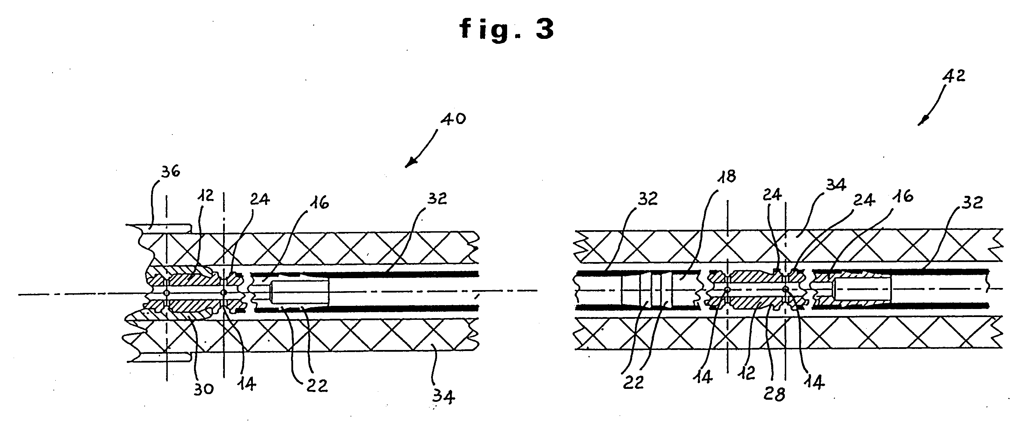

The connecting piece 10 is provided with a longitudinally extended drilling which, according to a preferred non critical embodiment, has a smaller diameter in correspondence of the central sector 12 along which the radial holes 14 are obtained. Said connecting piece 10 is first of all suitable to easily connect the free end of the small metal tube 30, coming out from the pressure assssembly of a servo-control for steering vehicles, to a flexible duct 32, both of them being wrapped up by an external tube from rubber 34, as shown on Figs. 2 and 3.

Fig. 2 shows schematically the assembled whole, wherein the connecting piece subject matter of this invention connects the aforementioned elements integrated in the rubber tube 14, whose end is tightened by a metal collar 36 of a known type. The small tube 30 coming out from the pressure assembly has a couple of protruding approached collars 38, 38', obtained by permanent deformation of the material, which circumscribe a housing groove for collar 36; besides, on the small tube 30 a plurality of analogous grooves 40, approached to one another, is obtained, which form as many grasping sectors for the external rubber tube 34, which is tightened on same by operating on collar 36. The connecting piece 10 is so inserted in the small tube 30 as to cause one of its end sectors, for instance sector 18, as well as the length of the central sector 12 up to the cone-shaped portion 28, to be circumscribed by said small tube; the end of the latter is therefore connected by squashing to said cone-shaped portion 28, realizing in this way the connection between the two components. The protruding gears 22 obtained along sector 18 of element 10 have obviously a size compatible with said insertion operation, their max. diameter being slightly smaller than the inner diameter of the small tube 30. The opposing sector of element 10, which is also provided with analogous protruding gears 22, is suitable to be inserted into the flexible internal duct 32, suitably sized as concerns the diameter, by means of a simple and final intervention of pressure-joining.

The first set of radial holes 14 remains circumscribed by the small tube 30, while the second set of analogous holes is on sight, being obtained along the forwardmost portion of the central sector 12. Shoulder 24, which circumscribes from above the second set of holes and which develops from the cone-shaped portion 28, hits the compressed end of the small tube 30.

Once the assembly has been realized, the connecting piece 10 stably connects the small metal tube 30 to the flexible duct 32 and is almost fully fitted in them, except for the small portion of the central sector 12 along which a set of radial holes 14 is provided. The latter communicate with the annular space circumscribed by the external rubber tube 34, allowing the coming out along same of part of the fluid which comes pressurized from the small tube 30, flowing into the axial hole obtained in element 10. Such radially orientated coming out dampens the pressure impulses of the fluid, causing the formation of a counter-pressure which deadens the noisiness.

Figure 3, comprising two partial views, shows schematically the case in which the connecting piece 10 subject matter of this invention is utilized for the connection of two lenghts of the flexible inner duct 32; the first section of said figure, referred to as a whole by 40, defines the characteristic application and structure of piece 10 as described previously, while the second length of same figure, referred to by 42, illustrates the further utilization of said piece within the frame of an hydraulic system especially referred to a steering wheel for vehicles.

In this hypothesis, a piece 10 is utilized also for the stable connection of two length of the flexible duct 32, which develops coaxially relatively to the external rubber tube 34. Said additional piece 10, shaped as a sleeve with a central sector 12 with two or more sets of radial holes 14 and opposing sectors 16, 18 provided with inclined plane protruding gears 22, breaks off the continuity of the internal flexible duct 32 and creates along same a plurality of radial exhausts through said holes, suitable to further dampen the pressure impulses of the fluid.

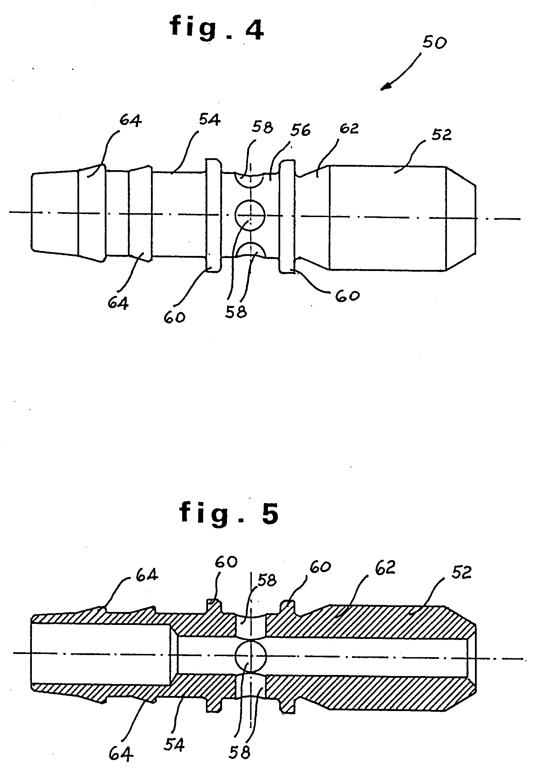

Figs. 4 and 5 schematically show an alternative embodiment of the connecting piece according to this invention.

In this hypothesis, said connecting piece, referred to as a whole by 50, has a simplified structure relatively to the previously described one, and is suitable to stably connect only the small metal tube coming out from the pressure assembly to the internal flexible small tube, joining up with the solution of Fig. 2 and the first section of Fig. 3.

The longitudinally drilled connection 50 is constituted by a substantially cylindrical body, circumscribed by two opposing sectors 52, 50, between which a central portion 56 is obtained, provided with at least a set of radial holes 58, arranged, by way of example, at 90° relatively to one another.

The central portion 56 is circumscribed, on the opposing fronts, by a shoulder 60, constituted by a gear whose diameter is greater relatively to the rest of the body. Sector 52, in correspondence of the end which comes in touch with shoulder 60, is sunk according to an inclined orientation, to form a cone-shaped portion 62; the opposing sector 54 is provided with a couple of protruding gears 64, identical to those obtained on element 10. The assembly of connection 50 provide, in the same way as the embodiment of Fig. 2, the closing by squashing of the small metal tube 30, whose end rests along the cone-shaped portion 62, just above shoulder 60; in this way, sector 52 of connection 50 with said small tube is locked.

The opposing sector 54 of said connection is pressure-fitted into the flexible duct 32, whose mouth hits the other shoulder 60. Once the assembly is realized, the central portion 56 of connection 50 is exposed within the rubber tube 34; therefore, the fluid can come out through the radial holes 58 communicating with the annular space circumscribed by said tube, dampening the pressure impulses.

Figs. 4 and 5 illustrate by way of example one only set of radial holes 58, but the same may be obviously obtained by sets of two or three, possibly also in greater number and with a different orientation.

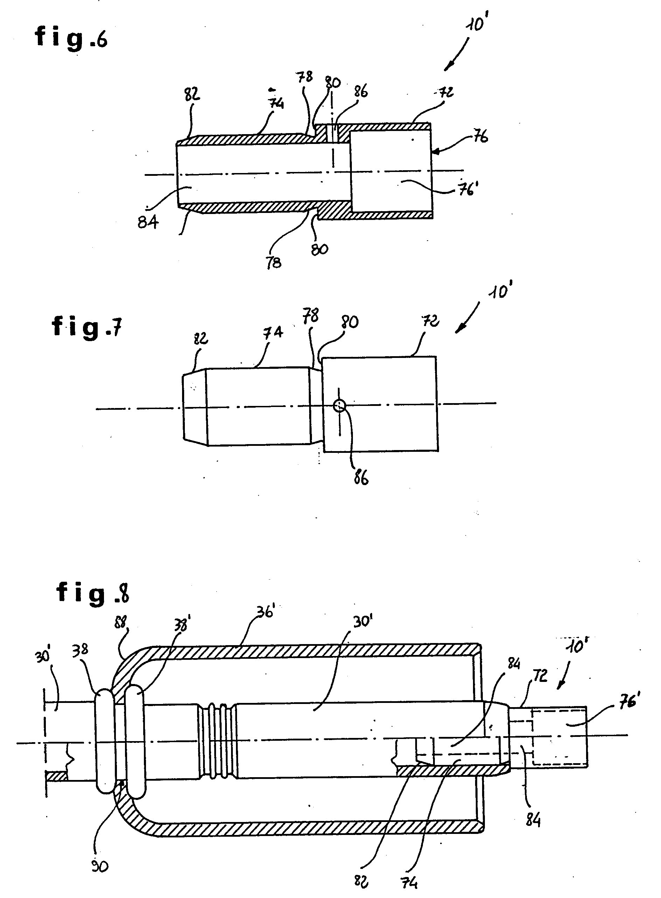

With starting reference to Figs. 6 and 7, which show still a further embodiment of this invention, the connecting piece for hydraulic circuits, referred to as a whole by 10', is constituted by a substantially cylindrical body composed by two integral sectors, namely a front sector 72 and a back sector 74, having differentiated diameters; said front sector 72, with a greater diameter and a regular cylindrical form, has a constant diameter axial hole 76, which extends, by way of example, for a length equal to about 2/3 of the development of said sector; hole 76 circumscribes a socket seat 76', whose diameter is slightly smaller than the external diameter of sector 72, provided to house and lock the back end of a flexible duct (not shown), preferably from metal, which will be illustrated in the following.

The back sector 74 of the connecting piece 10' has a smaller diameter relatively to the opposite sector 72, from which it develops axially and without solution of continuity. According to a preferred non critical embodiment, said sector 74 has a tapered portion 78, obtained near the point of connection with the back head of said sector 72, which portion 78 further stresses the diameter difference between the two sectors, circumscribing a shoulder 80. An analogous tapering, indicated by 82, is advantageously realized in correspondence of the opposing end of sector 74. The latter is provided with an axial hole 24, which connects to hole 76 obtained along sector 72, relatively to which it has a smaller diameter. On the whole, hole 84 extends along the whole sector 74 and also into the adjoining front sector 72, communicating directly with said hole 76 having a greater diameter.

In correspondence of the forwardmost part of hole 84, partly extended into the front sector 72, at least a smaller diameter radial hole 86 is advantageously obtained, through which part of the counterpressure is discharged which forms within the servo-mechanism during the running; said hole is realized near the backwardmost portion of the front sector 72 of the connecting piece 10', substantially close by shoulder 80 from which the back sector (74) develops.

Fig. 8 shows schematically the connecting piece 10' in working position, i.e. with its back sector 74 connected to the pressure assembly of a servo-mechanism. Said internal tube is indicated by 30' and is traditionally placed within a bell-collar 36', whose back end 88 is circumscribed by a couple of protruding collars 38 arranged near to one another; the latter, obtained by permanent deformation of said tube 30' circumscribe a groove 90 for housing the back end 88 of collar 36'. The connecting piece 10' is coupled to tube 30' whose front end protrudes slightly from collar 36'; the back sector of said element, in the case in point, is fully inserted into tube 30' up to the point where shoulder 80 hits the edge of said tube. The front end of tube 30' is therefore subject to radial compression, which realizes the locking of the connecting piece 10: in fact, just as in the hypothesis of the first embodiment, the end of tube 30' rests, either partly or in full, along the tapered portion 78 of said connecting piece.

A flexible duct is easily connectable to the front sector 72, which duct is preferably from metal, for instance a small tube of the type utilized for the protection of cables and sheaths, whose external diameter is slightly smaller than that circumscribed by the socket seat 76'. The flexible duct, fitted into seat 76', is finally connected to the connecting piece 10' by means of a calking operation or the like, carried out starting from the side surface of the cylindrical sector 72.

As can be inferred from the above, the many advantages reached by this invention are evident.

The connecting piece subject matter of this invention allows, in all the embodiments proposed, an easy and quick connection between the components of an hydraulic circuit and shows high reliability characteristics as concerns the tightness of the latter, with no need for complicated operations during the construction or assembly stages.

With reference to the first embodiment, the possibility of positioning said element along the internal flexible duct of the circuit, besides above same, is particularly advantageous to preliminarily connect the small metal tube coming out from the pressure source.

Besides, the presence of a purality of radial holes obtained along the connecting pieces ensures a substantial reduction in the pressure impulses of the operating fluid.

However, the invention as described hereabove and claimed hereafter, has been merely proposed by way of example, the same being susceptible of many modifications and variants, all of which fall within the scope of the invention concept.

For instance, the connecting piece may have a greater number of sets of radial holes obtained along the central sector, possibly spaced from one another in different ways and/or differently orientated relatively to the chamber circumscribed by the external rubber tube.

Lastly, it is understood that the connecting piece subject matter of this invention, while being proposed in particular to be utilized in the steering wheels of vehicles, can be utilized in any field, especially in the hydraulic circuits which require the reduction or the control of pressure impulses of the fuild flowing in them.

## Claims

1. Connecting piece for hydraulic circuits, suitable for balancing the pressure of the fluid contained therein, comprising a substantially cylindrical, axially drilled body (10, 50, 10'), made from metal or other suitable material, for the connection of rigid and/or flexible ducts (30), (32), (30'), coaxial relatively to a sleeve (34), characterized in that it has at least a sector (12), (56), (72) provided with one or more radial holes (14), (58), (86), said holes being obtained along the median part of said connecting piece.

2. Connecting piece according to claim 1, characterized in that it has two opposing end sectors (16), (18), on which two or more inclined plane protruding gears (22) are obtained.

3. Connecting piece according to the preceding claims, characterized in that at least the set of radial holes (14) is circumscribed on the opposing fronts by a shoulder (24), said holes being positioned along a groove (26) and orientated at 90° relatively to one another.

4. Connecting piece according to the preceding claims, characterized in that the central sector (12) is sunk, at least in the direction of one of said shoulders (24), according to an inclined plane (28), to form a cone-shaped portion which develops along the length comprised between two sets of holes (14).

5. Connecting piece according to one or more of the preceding compatible claims, characterized in that it is constituted by substantially cylindrical opposing sections (52), (54), between which said central portion is obtained (56), provided with at least a set of radial holes and circumscribed, on opposing fronts, by a shoulder (60) whose diameter is slightly greater than the rest of the body, in correspondence of the end which comes in touch with one of said shoulders, sector (52) forming a cone-shaped portion (62).

6. Connecting piece according to one or more of the preceding claims, characterized in that sector (54) is provided with one or more protruding gears (64) which form annular truncated cone portions whose smaller side looks towards its free end.

7. Connecting piece according to one or more of the preceding compatible claims, characterized in that the substantially cylindrical body (10') is composed by two integral sectors, namely a front sector (72) and a back sector (74), along which a through hole having differentiated diameters (76), (84) is obtained, which at least in correspondence of said front sector (72) circumscribes a socket seat (76') partly longitudinally extended into said sector.

8. Connecting piece according to one or more of the preceding claims, in particular claim 7, characterized in that it has, along the back sector (74), an axial hole (84) communicating with hole (76) of the front sector (72) and partly developed in the latter, a tapered portion (82) being obtained at the free end of said sector (74).

9. Connecting piece according to claims 6, 7, characterized in that the back sector (74) and hole (84) obtained along said sector have a diameter respectively smaller relatively to the opposite sector (72) and its corresponding hole (76), a limitedly extended tapered portion (78) being obtained between the two sectors (72), (74), which circumscribes a shoulder (80).

10. Connecting piece according to one or more of the preceding claims, characterized in that the front sector (72) has, near the connecting point with the remaining sector (74), one or more radial holes (86) communicating with hole (84).
